# EUROPÄISCHE PATENTSCHRIFT

(11) **EP 1 262 355 B1**
(45) Veröffentlichungstag und Bekanntmachung des Hinweises auf die Patenterteilung: **12.11.2003**
(21) Anmeldenummer: 02007803.6
(22) Anmeldetag: 06.04.2002
(51) Int. Cl.: B60K 15/05

(54) **Kraftfahrzeug-Kraftstofftank mit einem Einfüllstutzen zur Aufnahme einer Zapfpistole für Dieselkraftstoff**
Fuel tank for a vehicle comprising a filler neck for receiving a diesel fuel filler nozzle
Réservoir de carburant pour un véhicule avec un embout pour recevoir un pistolet de remplissage de gazole

(30) Priorität: 30.05.2001 DE 10126207
(43) Veröffentlichungstag der Anmeldung: 04.12.2002
(73) Patentinhaber: Bayerische Motoren Werke Aktiengesellschaft, 80809 München (DE)
(72) Erfinder: Nefischer, Peter, 4320 Perg (AT); Wimmer, Rudolf, 4431 Haidershofen (AT); Hoelle, Christoph, 4400 Steyr (AT); Steindl, Werner, 4810 Gmunden (AT); Hellmuth, Michael, 96231 Staffelstein (DE); Leonhardt, Herbert, 94501 Aldersbach (DE)

(56) Entgegenhaltungen:
- DE-A- 10 037 824
- FR-A- 2 741 014
- GB-A- 2 287 700
- US-A- 4 638 919
- US-A- 5 062 541
- US-B1- 6 302 169

## Beschreibung

Die Erfindung betrifft einen Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, sowie mit einem Element, das auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser ein Befüllen des Kraftstofftanks verhindert wird. Zum technischen Umfeld wird beispielshalber auf die DE 196 39 825 A1 verwiesen, während ein Kraftstofftank nach dem Oberbegriff des Anspruchs 1 in der nicht vorveröffentlichten deutschen Patentanmeldung 100 51 847 beschrieben ist.

Mit der Markteinführung von Bleifrei-Kraftstoffen für Ottomotoren wurden die bis dahin für sämtliche Kraftstoffsorten einen einheitlichen Durchmesser aufweisenden Tank-Zapfpistolen (jedenfalls solche für Personenkraftwagen) für diesen neuen Kraftstoff im Durchmesser reduziert. Durch einen sog. Restriktor mit einer sog. Bleifrei-Klappe im Einfüllrohr von Kfz.-Kraftstofftanks war und ist es somit nicht möglich, bleihaltigen Otto-Kraftstoff oder DieselKraftstoff (die an den Tankstellen hierfür vorhandenen Zapfpistolen besitzen den gleichen, gegenüber den Zapfpistolen für Bleifrei-Kraftstoff größeren Durchmesser) in den Kraftstofftank eines Kfz.'s einzufüllen, das für Betrieb mit Bleifrei-Kraftstoffen vorgesehen ist. Auf diese Weise ist der an diesen Fahrzeugen vorhandene Abgaskatalysator sicher vor einer Zerstörung, hervorgerufen durch Falschbetankung mit bleihaltigem Kraftstoff, geschützt.

Weiterhin ist es jedoch möglich, dass versehentlich bleifreier Otto-Kraftstoff (Benzin) in den Tank eines Kfz.'s eingefüllt wird, welches mit Dieselkraftstoff zu betreiben ist. Wird dann einem Dieselmotor reiner Ottokraftstoff zugeführt, so kann dies zu erheblichen Schäden führen. Allenfalls ein geringer Anteil von Ottokraftstoff bzw. Benzin in einer relativ großen Menge von Dieselkraftstoff kann toleriert werden (und wurde bzw. wird teilweise im Winter beigemengt, um den Kaltstart zu erleichtern), einen höheren Benzinanteil in einem Diesel-Benzin-Kraftstoffgemisch gilt es jedoch unbedingt zu vermeiden.

Mit der vorliegenden Erfindung soll nun aufgezeigt werden, wie eine Falschbetankung insbesondere eines mit Dieselkraftstoff zu betreibenden Fahrzeuges mit Bleifrei-Benzin vermieden werden kann, bzw. wie vermieden werden kann, dass ein Kraftstofftank mit einem Einfüllstutzen mit größerem Durchmesser mit Kraftstoff aus einer Zapfpistole mit kleinerem Durchmesser befüllt wird. (=Aufgabe der Erfindung).
Zur Lösung dieser Aufgabe ist vorgesehen, dass ein (in der bereits genannten, nicht vorveröffentlichten deutschen Patentanmeldung 100 51 847 beschriebenes) Element, welches auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser in den Einfüllstutzen ein Befüllen des Kraftstofftanks verhindert wird, als verschwenkbare Sperrklappe ausgebildet ist, die in ihrer Schließposition die Verbindung zwischen dem Einfüllstutzen und dem Innenraum des Kraftstofftanks unterbricht und die mittels zumindest eines Sperrhakens in der Schließposition gehalten wird, wobei der Sperrhaken nur durch eine Tank-Zapfpistole mit besagtem größeren Durchmesser in eine die Sperrklappe freigebende Position gebracht werden kann. Vorteilhafte Aus- und Weiterbildungen sind Inhalt der Unteransprüche.

Erfindungsgemäß soll eine Sperrklappe zum Einsatz kommen, wie sie bereits grundsätzlich als sog. Bleifrei-Klappe bekannt (und bspw. in einer besonderer Gestaltung in der eingangs genannten DE 196 39 825 A1 beschrieben) ist. Eine derartige Sperrklappe kann in ihrer Schließposition optimal und in bewährter Weise eine Befüllung des Kraftstofftanks mit dem falschen Kraftstoff verhindern und zeichnet sich dabei durch einen einfachen Aufbau sowie durch eine über der Lebensdauer des Kraftfahrzeugs zuverlässige Funktion aus. Jedoch ist das von der Bleifrei-Klappe bekannte Prinzip, nach welchem diese Klappe lediglich von einer der verschieden dimensionierten Tank-Zapfpistolen, nämlich derjenigen mit einem kleineren Durchmesser, geöffnet werden kann, hier naturgemäß nicht nutzbar. Bei der bekannten Bleifreiklappe ermöglicht es nämlich eine einfache Barriere, eine Tank-Zapfpistole mit größerem Durchmesser von der Bleifreiklappe fernzuhalten, während eine Tank-Zapfpistole mit kleinerem Durchmesser an dieser Barriere vorbeigeführt werden kann und danach die Bleifrei-Klappe aufstoßen kann.

Da eine solche einfache Barriere jedoch nicht eine Tank-Zapfpistole mit kleinerem Durchmesser zurückhalten, hingegen eine solche mit größerem Durchmesser passieren lassen kann, wird mit der vorliegenden Erfindung nun zumindest ein Sperrhaken oder dgl. vorgeschlagen, der die Sperrklappe zunächst in ihrer sog. Schließposition, in welcher ein Befüllen des Kraftstofftanks verhindert wird, hält. Wenn dann die "richtige" Tank-Zapfpistole (mit dem größeren Durchmesser) in den Einfüllstutzen eingeführt wird, so wird von dieser der Sperrhaken in eine andere Position gebracht, in der dieser die Sperrklappe freigibt, so dass die Sperrklappe danach in ihre sog. Offenposition überführt werden kann, in welcher ein Befüllen des Kraftstofftanks möglich ist. Wird hingegen eine "falsche" Tank-Zapfpistole in den Einfüllstutzen eingeführt, so soll der Sperrhaken seine die geschlossene Sperrklappe verriegelnde Position beibehalten.

Konstruktiv ist dies einfach dadurch umsetzbar, dass der oder die ggf. mehrfach vorhandenen Sperrhaken solchermaßen im Randbereich des Einfüllstutzen-Querschnitts angeordnet ist oder sind, dass eine eingeführte Tank-Zapfpistole mit größerem Durchmesser den oder die Sperrhaken verlagern kann, eine eingeführte Tank-Zapfpistole mit kleinerem Durchmesser hingegen nicht.

Wenn dabei nicht gewährleistet ist, dass eine Tank-Zapfpistole stets absolut zentral oder mittig in den Einfüllstutzen eingeführt wird, so empfiehlt es sich, zumindest zwei und bevorzugt mehrere Sperrhaken einander (paarweise) im wesentlichen diametral gegenüberliegend im Einfüllstutzen anzuordnen. Lediglich dann, wenn sämtliche Sperrhaken gleichzeitig verlagert werden, was praktisch nur mit einer Tank-Zapfpistole mit größerem Durchmesser, hingegen sicher nicht mit einer solchen mit kleinerem Durchmesser möglich ist, wird die Verriegelung der Sperrklappe (in ihrer sog. Schließposition) aufgehoben.

Auf einfache und zuverlässige Weise kann die Sperrklappe bspw. am dem Tank-Innenraum zugewandten Ende des Einfüllstutzens aufgehängt und wie gewünscht positioniert werden, wenn die Sperrklappe durch Federkraft in ihre Schließposition gebracht und/oder in dieser gehalten wird und durch Einführen der Tank-Zapfpistole mit besagtem größeren Durchmesser nach Freigabe durch den oder die Sperrhaken in eine die Verbindung zwischen dem Einfüllstutzen und dem Innenraum des Kraftstofftanks freigebende Position verschwenkbar ist. Insbesondere ist damit gewährleistet, dass nach Beendigung eines Tankvorgangs die Sperrklappe mit Herausziehen der Tank-Zapfpistole aus dem Einfüllstutzen selbsttätig in ihre Schließposition gelangt. Praktisch gleichzeitig können dann die Sperrhaken die Sperrklappe in dieser Schließposition verriegeln.

Dies ist besonders einfach umsetzbar, wenn der oder die Sperrhaken unter Einwirkung einer Tank-Zapfpistole mit besagtem größeren Durchmesser gegen Federkraft oder unter elastischer Verformung aus der die Sperrklappe verriegelnden Position in eine die Sperrklappe freigebende Position überführbar sind, da mit Entfernen der Zapfpistole eine selbsttätige Rückführung der Sperrhaken und somit eine selbsttätige Verriegelung der Sperrklappe erfolgt.

Wenn - wie weiterhin vorgeschlagen - der oder die Sperrhaken in einer zur Längsachse des Einfüllstutzens im wesentlichen senkrechten Richtung verschiebbar und/oder verschwenkbar ist oder sind, so ist keine aufwendige Bewegungsübertragung oder dgl. erforderlich. Vielmehr werden die Sperrhaken alleine durch die Einführbewegung der "richtigen", d.h. der einen größeren Durchmesser aufweisenden Tank-Zapfpistole quasi zur Seite hin verdrängt.

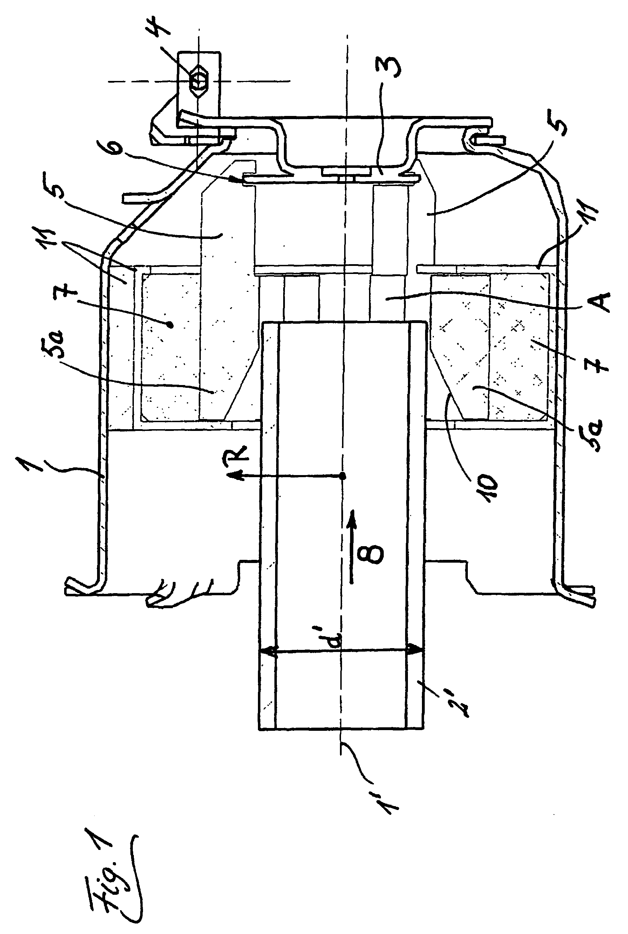

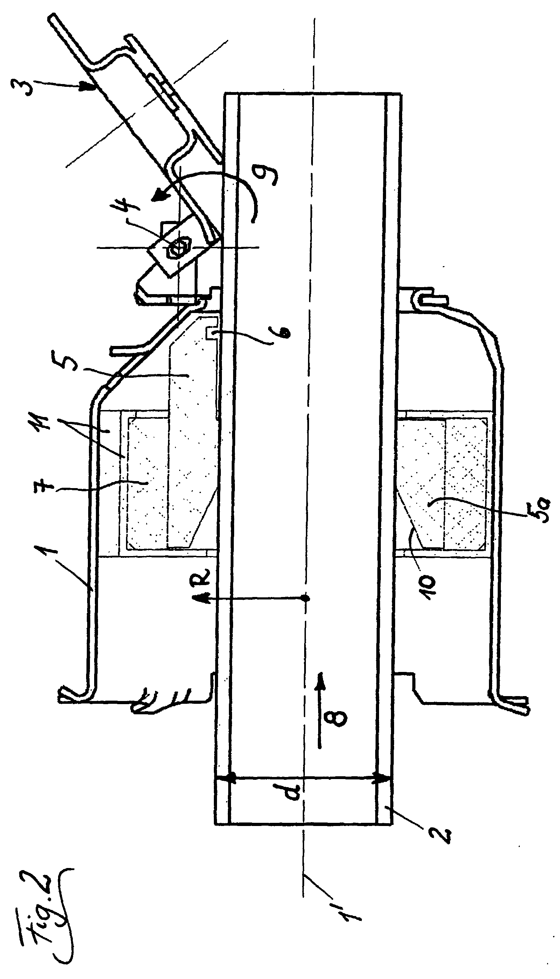

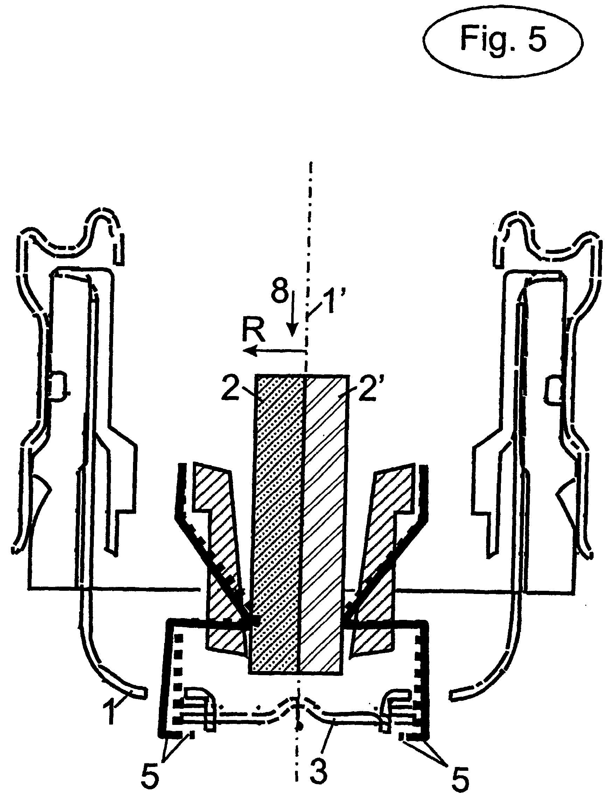

Im folgenden wird die Erfindung anhand zweier bevorzugter Ausführungsbeispiele weiter erläutert.
Die beigefügte **Figur 1** zeigt den Längsschnitt eines erfindungsgemäßen Einfüllstutzens mit eingeführter "falscher" Tank-Zapfpistole mit geringerem Durchmesser, während in **Figur 2** der entsprechende Längsschnitt mit eingeführter "richtiger" Tank-Zapfpistole mit größerem Durchmesser dargestellt ist.

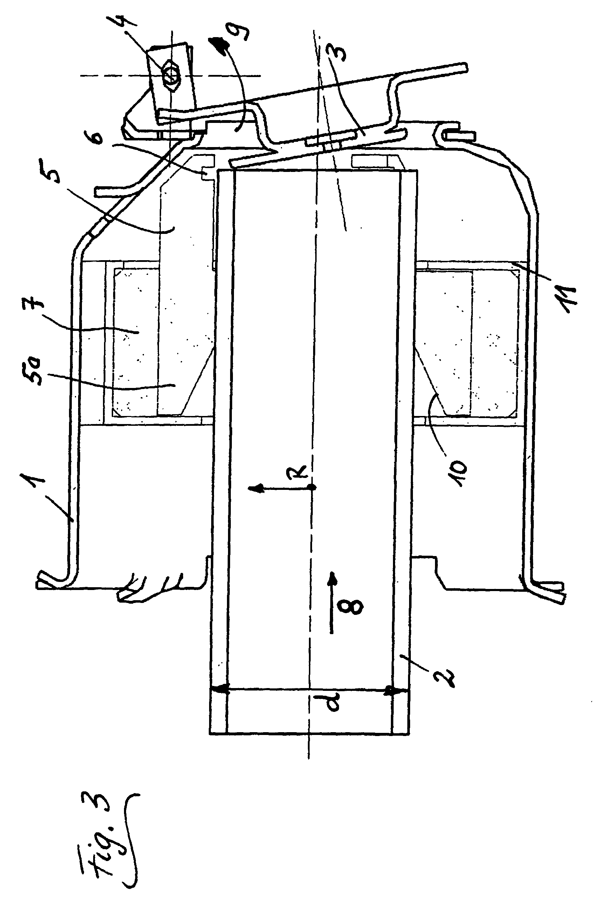

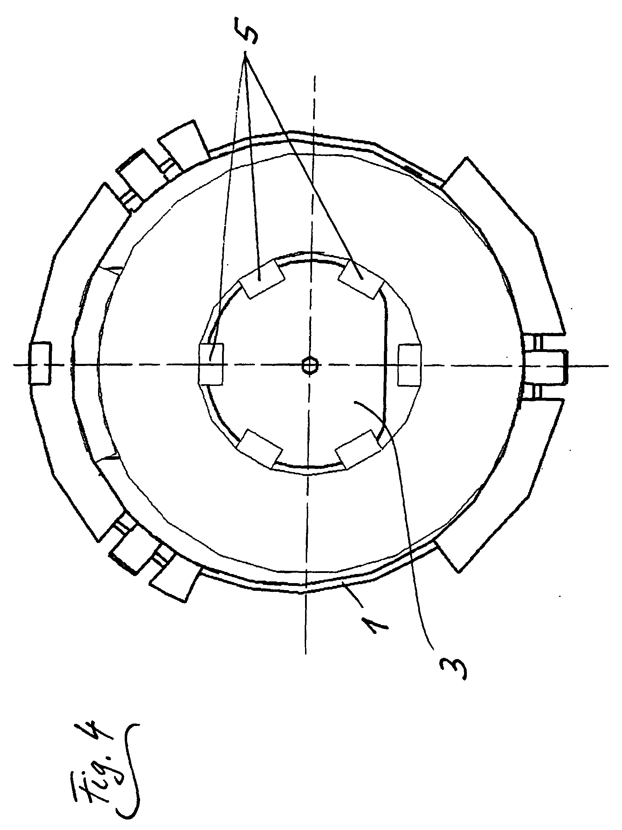

**Figur 3** zeigt eine der Figur 2 entsprechende Darstellung mit nur teilweise eingeführter Zapfpistole und in **Figur 4** ist die Ansicht X aus Figur 1, d.h. die Ansicht aus dem Innenraum des Kraftstofftanks auf den durch die Sperrklappe verschlossenen Einfüllstutzen dargestellt.
Schließlich zeigt **Figur 5** eine andere Ausführungsform in einer der Figur 1 entsprechenden Darstellung. Erfindungswesentlich können grundsätzlich sämtliche näher beschriebenen Merkmale sein.

Mit der Bezugsziffer 1 ist ein an einem nicht dargestellten Kraftstofftank eines Kraftfahrzeugs vorgesehener Einfüllstutzen bezeichnet, von dem hier lediglich der für die vorliegende Erfindung wesentliche Abschnitt dargestellt ist und durch den hindurch Kraftstoff in den Kraftstofftank eingefüllt werden kann, indem in den Einfüllstutzen eine Tank-Zapfpistole 2 bzw. 2' eingeführt wird. Wie bekannt existieren (zur Betankung von PKWs) an den Tankstellen zwei unterschiedliche Tank-Zapfpistolen, nämlich solche mit einem größeren Außen-Durchmesser d = 24 mm und solche mit einem geringeren Außen-Durchmesser d' = 20 mm. Eine letztgenannte ist in **Fig.1** unter der Bezugsziffer 2' dargestellt und wird grundsätzlich zur Abgabe von bleifreiem Ottokraftstoff verwendet. Eine erstgenannte mit größerem Durchmesser ist in den **Figuren 2, 3** unter der Bezugsziffer 2 dargestellt und wird grundsätzlich zur Abgabe von Dieselkraftstoff verwendet.

Wie die **Figuren 1 - 3** zeigen, wird eine Tank-Zapfpistole 2 bzw. 2' hier von links in den Einfüllstutzen 1 eingeführt, um den Kraftstofftank, der sich rechtsseitig an den Einfüllstutzen 1 anschließt, zu befüllen. Am Ende des Einfüllstutzens 1 ist jedoch eine Sperrklappe 3 angeordnet, die in **Figur 1** in ihrer Schließposition, in **Figur 2** in ihrer Offenposition und in **Figur 3** zu Beginn einer Öffnungsbewegung dargestellt ist. Wie ersichtlich ist diese Sperrklappe 3 um eine. Schwenkachse 4 verschwenkbar gelagert, um von ihrer Schließposition, in welcher sie das weitere Einführen der Tank-Zapfpistole 2' in den Einfüllstutzen 1 gemäß der Darstellung in **Figur 1** verhindert, in ihre Offenposition gemäß **Figur 3** gebracht werden zu können, in welcher sie den Einfüllstutzen 1 zum weiteren Einführen der Tank-Zapfpistole 2 freigibt. Lediglich wenn die Tank-Zapfpistole 2 soweit wie in **Figur 3** dargestellt in den Einfüllstutzen 1 eingeführt ist, kann aus dieser Kraftstoff in den Kraftstofftank eingefüllt werden, andernfalls schaltet die Tank-Zapfpistole (wie bekannt) aufgrund des sich aufbauenden Gegendrucks selbsttätig ab, so dass nicht einmal in der Darstellung nach **Figur 3** eine nennenswerte Kraftstoffmenge in den Kraftstofftank gelangen kann.

Wie **Figur 1** zeigt, ist die Sperrklappe 2 in ihrer Schließposition durch mehrere Sperrhaken 5 gehalten bzw. gesichert. Über dem Umfang der im wesentlichen kreisförmigen Sperrklappe 3 (vgl. **Figur 4**) verteilt sind hier insgesamt sechs solcher Sperrhaken 5 angeordnet, und zwar im wesentlichen gleichmäßig verteilt einander paarweise gegenüberliegend. Jeder Sperrhaken 5, der in Richtung der Längsachse 1' des Einfüllstutzens 1 stabförmig ausgebildet und im wesentlichen parallel zu dieser Längsachse 1 im Einfüllstutzen 1 angeordnet ist, weist in seinem der Sperrklappe 3 benachbarten Endbereich eine Rastnut 6 auf, in welcher ein kleiner Ring-Segment-Abschnitt des Außenumfangs der Sperrklappe 3 einrasten kann, wenn sich die Sperrhaken 5 in ihrer üblichen, in **Figur 1** dargestellten Position befinden. In dieser Position werden sämtliche Sperrhaken 5 durch ein lediglich abstrakt dargestelltes Ring-Federelement 7 gehalten.

Wie aus **Figur 1** hervorgeht, sind die mehreren Sperrhaken 5 solchermaßen im Randbereich des im wesentlichen kreisförmigen Querschnitts des Einfüllstutzens 1 angeordnet, dass die kleinere, d.h. einen geringeren Durchmesser d' aufweisende Tank-Zapfpistole 2' gemäß Pfeilrichtung 8 zwischen den im wesentlichen parallel zur Längsachse 1' des Einfüllstutzens 1 ausgerichteten Sperrhaken 5 hindurch geführt werden kann, ohne dass dabei sämtliche Sperrhaken 5 gegen die Kraft des Ring-Federelementes 7 in Radialrichtung R (bezüglich der Längsachse 1) nach außen verschoben werden. Somit bleibt die zunächst, d.h. ohne dass sich eine Tank-Zapfpistole 2 bzw. 2' im Einfüllstutzen 1 befindet, durch die Sperrhaken 5 verriegelte Sperrklappe 3 verriegelt, auch wenn die einen kleineren Durchmesser d' aufweisende Tank-Zapfpistole 2' in den Einfüllstutzen 1 eingeführt wird. Dabei sei bereits an dieser Stelle darauf hingewiesen, dass selbst dann, wenn die Tank-Zapfpistole 2' außermittig, d.h. nicht koaxial zur Längsachse 1' in den Einfüllstutzen 1 eingeführt wird, allenfalls ein oder zwei der Sperrhaken 5, jedoch nicht sämtliche Sperrhaken 5 geöffnet werden.

Wird jedoch, wie die **Figuren 3 und 2** zeigen, eine Tank-Zapfpistole 2 mit größerem Durchmesser d gemäß Pfeilrichtung 8 in den Einfüllstutzen 1 eingeführt, so werden sämtliche Sperrhaken 5 gegen die Federkraft des Ring-Federelementes 7 in Radialrichtung R geringfügig nach außen verlagert, wodurch die Sperrklappe 3 freigegeben wird, d.h. die Sperrklappe 3 wird nicht länger von den Rastnuten 6 der Sperrhaken 5 festgehalten, wie am besten aus **Figur 3** hervorgeht. Dies hat zur Folge, dass die Sperrklappe 3 von der weiter gemäß Pfeilrichtung 8 eingeführten Tank-Zapfpistole 2 aufgedrückt, d.h. gemäß Pfeilrichtung 9 um die Schwenkachse 4 in ihre Offenposition verschwenkt wird. Danach kann problemlos der Kraftstofftank mittels der Zapfpistole 2 befüllt werden.

Die entsprechende Anordnung der Sperrhaken 5 im Einfüllstutzen 1 lässt sich auch solchermaßen beschreiben, dass diese Sperrhaken 5 in ihrer die Sperrklappe 3 in ihrer Schließposition verriegelnden Lage zwischen sich einen freien kreiszylindrischen Abschnitt A einschließen bzw. einen solchen kreiszylindrischen Abschnitt A begrenzen, dass durch diesen Abschnitt A, dessen Längsachse gleich der Längsachse 1' des Einfüllstutzens 1 ist, gerade eben die Tank-Zapfpistole 2' mit dem kleineren Durchmesser d' hindurchgeführt werden kann. Der Durchmesser des Abschnitts A ist somit lediglich minimal größer als der Durchmesser d' der Zapfpistole 2'.

Wird hingegen die Tank-Zapfpistole 2 mit dem größeren Durchmesser d in den kreiszylindrischen Abschnitt A gemäß Pfeilrichtung 8 eingeführt, so wird dieser Abschnitt A durch die beschriebene Verlagerung der Sperrhaken 5 in Radialrichtung R aufgeweitet, und zwar auf ein solches Maß, dass der Innendurchmesser dieses dann aufgeweiteten kreiszylindrischen Abschnittes dann praktisch gleich dem Außen-Durchmesser d der Zapfpistole 2 ist. Dabei sind die Abmessungen so zu wählen, dass in diesem Zustand sämtliche Sperrhaken 5 die Sperrklappe 3 freigeben.

In diesem Zusammenhang sei nochmals erläutert, was passiert, wenn die den geringeren Durchmesser d' aufweisende Zapfpistole 2' exzentrisch, d.h. nicht koaxial mit der Längsachse 1' in den Einfüllstutzen 1 eingeführt wird. Dann kann offensichtlich nur einer oder maximal zwei oder drei der hier insgesamt sechs Sperrhaken 5 von der Zapfpistole 2' in Radialrichtung R nach außen verlagert werden, keinesfalls jedoch sämtliche Sperrhaken 5. Somit bleibt dann - wie gewünscht - die Sperrklappe 3 verriegelt.

Ebenfalls in diesem Zusammenhang sei auf eine sog. Einführschräge 10 verwiesen, die auf der einer gemäß Pfeilrichtung 8 eingeführten Tank-Zapfpistole 2 bzw. 2' zugewandten Seite jedes Sperrhakens 5 vorgesehen ist. Diese Einführschrägen 10 stellen sicher, dass insbesondere die Zapfpistole 2 mit dem größeren Durchmesser d, aber auch die Zapfpistole 2' mit dem geringeren Durchmesser d' sicher in den besagten kreiszylindrischen Abschnitt A zwischen den Sperrhaken 5 eingeführt werden kann, ohne frontal auf die Stirnseite eines oder mehrerer Sperrhaken 5 aufzutreffen und folglich nicht weiter eingeführt werden zu können.

Was die Sperrklappe 3 betrifft, so wird diese zusätzlich federbelastet in ihrer Schließposition gehalten bzw. aus ihrer Offenposition bei entfernter Zapfpistole 2 unter Einwirkung eines figürlich nicht dargestellten Federelementes in ihre Schließposition bewegt, so wie dies grundsätzlich bereits von der eingangs erläuterten Beifrei-Klappe bekannt ist. Somit ist sichergestellt, dass mit Beenden eines Tankvorganges, wenn die Zapfpistole 2 gegen Pfeilrichtung 8 aus dem Einfüllstutzen 1 herausgeführt wird, sich die Sperrklappe 3 gegen Pfeilrichtung 9 wieder selbsttätig in ihre Schließposition bewegt. Unter Einfluss des Ring-Federelementes 7 (oder allgemein unter Einfluss einer entsprechenden Federbelastung) bewegen sich dann auch die Sperrhaken 5 wieder in ihre die Sperrklappe 3 in ihrer Schließposition verriegelnde Position.

In Details andersartig gestaltet ist das lediglich prinzipiell dargestellte Ausführungsbeispiel nach **Figur 5**. Gleiche Elemente sind hierbei mit den gleichen Bezugsziffern wie in den vorhergehenden Figuren versehen. Linksseitig der Längsachse 1' des Einfüllstutzens 1 ist eine Längshälfte einer Tank-Zapfpistole 2 mit größerem Durchmesser d und rechtsseitig der Längsachse 1' ist eine Längshälfte einer Tank-Zapfpistole 2' mit geringerem Durchmesser d'dargestellt.

Anders als bislang erläutert sind insbesondere die Sperrhaken 5 gestaltet. So können diese direkt die Sperrklappe 3 umgreifen, d.h. es ist keine Rastnut 6 vorhanden, jedoch ist ansonsten die Funktion vergleichbar, d.h. jeder Sperrhaken 5 kann mit seinem freien, der Sperrklappe 3 benachbarten Endbereich in Radialrichtung R nach außen verlagert werden, um die Sperrklappe 3 für eine Verschwenkbewegung in ihre Offenposition freizugeben bzw. nach innen verlagert sein, um die Sperrklappe 3 in ihrer Schließposition zu verriegeln.

Ferner ist kein separates Federelement vorgesehen, um die Sperrhaken 5 in ihrer die Sperrklappe 3 verriegelnden Position zu halten. Vielmehr sind die Sperrhaken 5 elastisch verformbar, was ebenfalls eine Krafteinwirkung erfordert, und was insbesondere auch eine selbsttätige elastische Rückverformung zur Folge hat, wenn die besagte Krafteinwirkung beendet wird. Dabei kann diese besagte Krafteinwirkung durch eine eingeführte geeignete Tank-Zapfpistole, insbesondere eine Tank-Zapfpistole 2 mit größerem Durchmesser d, hervorgerufen werden. Dies wird im folgenden näher erläutert:

Sowohl linksseitig als auch rechtsseitig der Längsachse 1' ist jeweils ein Sperrhaken 5 in unterschiedlichen Positionen dargestellt. Die dunkelfarbige Darstellung gibt die Lage des Sperrhakens 5 wieder, wenn sich keine Zapfpistole 2 bzw. 2' im Einfüllstutzen 1 befindet, d.h. wenn die Sperrklappe 3 sicher verriegelt ist. Wird dann, wie rechts der Längsachse 1' dargestellt ist, eine Tank-Zapfpistole 2' mit geringerem Durchmesser d' gemäß Pfeilrichtung 8 in den Einfüllstutzen 1 eingeführt, so wird der Sperrhaken 5 ungünstigstenfalls, d.h. bei entsprechend exzentrischer Einführung (nicht koaxial zur Längsachse 1') zwar gering in Radialrichtung R in die hellfarbig dargestellte Position verschwenkt, jedoch bleibt in dieser Position die Sperrklappe 3 weiterhin verriegelt. Wird hingegen, wie linksseitig der Längsachse 1' dargestellt ist, eine Tank-Zapfpistole 2 mit größerem Durchmesser d gemäß Pfeilrichtung 8 in den Einfüllstutzen 1 eingeführt, so wird der Sperrhaken 5 soweit in Radialrichtung R nach außen in die hellfarbig dargestellte Position verschwenkt, dass die Sperrklappe 3 nicht weiter verriegelt und somit für eine Schwenkbewegung in ihre Offenposition freigegeben ist.

Nochmals zurückkommend auf das Ausführungsbeispiel nach den **Figuren 1 bis 4** erkennt man einen Gehäuseeinsatz 11 im Einfüllstutzen 1, in welchem das Ring-Federelement 7 sowie die Sperrhaken 5 über sog. Tragabschnitte 5a gelagert sind, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. Stets erhält man jedoch eine sichere und einfache Vorrichtung, mit Hilfe derer insbesondere eine Falschbetankung von dieselmotorisch angetriebenen Kraftfahrzeugen mit Bleifrei-Ottokraftstoff vermieden werden kann.

### Bezugszeichenliste:

- 1: Einfüllstutzen
- 1': Längsachse von 1
- 2: Tank-Zapfpistole mit größerem Durchmesser
- 2': Tank-Zapfpistole mit größerem Durchmesser
- 3: Sperrklappe
- 4: Schwenkachse (von 3)
- 5: Sperrhaken
- 5a: Tragabschnitt von 5
- 6: Rastnut (in 5 zur Aufnahme eines Ring-Segment-Abschnittes von 3)
- 7: Ring-Federelement
- 8: Pfeilrichtung: Einführen der Tank-Zapfpistole 2 bzw. 2'
- 9: Pfeilrichtung: Verschwenken von 3 in die Offenposition
- 10: Einführschräge
- 11: Gehäuseeinsatz

- A: kreiszylindrischer Abschnitt, gebildet durch die Sperrhaken 5
- R: Radialrichtung (bezüglich 1')
- d: größerer Durchmesser von 2
- d': geringerer Durchmesser von 2'

## Patentansprüche

1. Kraftfahrzeug-Kraftstofftank mit einem Einfüllstutzen (1), der hinsichtlich seiner Abmessung zur Aufnahme einer einen größeren Durchmesser (d) aufweisenden Tank-Zapfpistole (2), insbesondere einer Zapfpistole für Dieselkraftstoff, vorgesehen ist, sowie mit einem Element, welches auf das Einführen einer Tank-Zapfpistole (2) mit dem besagten größeren Durchmesser (d) anspricht und daraufhin ein Befüllen des Kraftstofftanks zulässt, während bei Einführen einer Tank-Zapfpistole (2') mit einem kleineren Durchmesser (d') in den Einfüllstutzen (1) ein Befüllen des Kraftstofftanks verhindert wird,
**dadurch gekennzeichnet, dass** das Element als verschwenkbare Sperrklappe (3) ausgebildet ist, die in ihrer Schließposition die Verbindung zwischen dem Einfüllstutzen (1) und dem Innenraum des Kraftstofftanks unterbricht und die mittels zumindest eines Sperrhakens (5) in der Schließposition gehalten wird, wobei der Sperrhaken (5) nur durch eine Tank-Zapfpistole (2) mit besagtem größeren Durchmesser (d) in eine die Sperrklappe (3) freigebende Position gebracht werden kann.

2. Kraftstofftank nach Anspruch 1,
**dadurch gekennzeichnet, dass** der oder die Sperrhaken (5) im Randbereich des Einfüllstutzen-Querschnitts angeordnet ist/sind.

3. Kraftstofftank nach Anspruch 1 oder 2,
**dadurch gekennzeichnet, dass** zumindest zwei, bevorzugt mehrere Sperrhaken (5) einander (paarweise) im wesentlichen diametral gegenüberliegend im Einfüllstutzen (1) angeordnet sind.

4. Kraftstofftank nach einem der vorangegangenen Ansprüche,
**dadurch gekennzeichnet, dass** die Sperrklappe (3) durch Federkraft in ihre Schließposition gebracht und/oder in dieser gehalten wird und durch Einführen der Tank-Zapfpistole (2) mit besagtem größeren Durchmesser (d) nach Freigabe durch den oder die Sperrhaken (5) in eine die Verbindung zwischen dem Einfüllstutzen (1) und dem Innenraum des Kraftstofftanks freigebende Position verschwenkbar ist.

5. Kraftstofftank nach einem der vorangegangenen Ansprüche,
**dadurch gekennzeichnet, dass** der oder die Sperrhaken (5) unter Einwirkung einer Tank-Zapfpistole (2) mit besagtem größeren Durchmesser (d) gegen Federkraft oder unter elastischer Verformung aus der die Sperrklappe (3) verriegelnden Position in eine die Sperrklappe (3) freigebende Position überführbar sind.

6. Kraftstofftank nach einem der vorangegangenen Ansprüche,
**dadurch gekennzeichnet, dass** der oder die Sperrhaken (5) in einer zur Längsachse (1') des Einfüllstutzens (1) im wesentlichen senkrechten Richtung (Radialrichtung R) verschiebbar und/oder verschwenkbar ist/sind.

7. Kraftstofftank nach einem der vorangegangenen Ansprüche,
**dadurch gekennzeichnet, dass** der oder die Sperrhaken (5) auf der der eingeführten Tank-Zapfpistole (2, 2') zugewandten Seite mit einer Einführschräge (10) versehen ist/sind.

## Claims

1. A vehicle fuel tank comprising a filler neck (1) dimensioned so as to receive a filler nozzle (2), especially a filler nozzle for diesel fuel, having a larger diameter (d), and also comprising an element which, on insertion of a filler nozzle (2) having the said larger diameter (d) responds by allowing the tank to be filled, whereas when a filler nozzle (2') having a smaller diameter (d') is inserted into the filler neck (1), the tank cannot be filled,
**characterised in that** the element is a pivotable stop flap (3) which in its closed position interrupts the connection between the filler neck (1) and the interior of the tank and is held in the closed position by at least one latch (5), wherein the latch (5) can be brought only by a filler nozzle (2) having the said larger-diameter (d) into a position for releasing the stop flap (3).

2. A fuel tank according to claim 1, **characterised in that** the latch or latches (5) are disposed in the edge region of the filler-neck cross-section.

3. A fuel tank according to claim 1 or 2, **characterised in that** at least two and preferably a number of batches (5) are disposed (in pairs) substantially diametrically opposite in the filler neck (1).

4. A fuel tank according to any preceding claim, **characterised in that** the stop flap (3) is brought and/or held in its closed position by spring force and is movable into a position releasing the connection between the filler neck (1) and the interior of the tank after being released by the latch or latches (5) following insertion of the filler nozzle (2) having the said larger diameter (d).

5. A fuel tank according to any preceding claim, **characterised in that** the latch or latches (5), by action of a filler nozzle (2) having the said larger diameter (d), are movable against spring force or by elastic deformation from the position locking the stop flap (3) into a position releasing the stop flap (3).

6. A fuel tank according to any preceding claim, **characterised in that** the latch or latches (5) are movable and/or pivotable in a direction (radial direction R) substantially at right angles to the longitudinal axis (1') of the filler nozzle (1).

7. A filler tank according to any preceding claim, **characterised in that** the latch or latches (5) are formed with an insertion slope (10) on the side facing the filler nozzle (2, 2') when inserted.

## Revendications

1. Réservoir de carburant pour un véhicule avec un embout (1) dont les dimensions sont prévues pour recevoir un pistolet de remplissage de réservoir (2) d'un diamètre (d) plus grand, notamment un pistolet de remplissage de gazole, ainsi qu'avec un élément qui se déclenche à l'introduction d'un pistolet de remplissage de réservoir (2) d'un diamètre (d) plus grand mentionné et qui autorise alors le remplissage du réservoir de carburant alors qu'il empêche le remplissage du réservoir de carburant si un pistolet de remplissage de réservoir (2') d'un diamètre (d') plus petit est introduit dans l'embout (1),
**caractérisé en ce que**
l'élément est en forme de clapet de verrouillage (3) pivotant qui interrompt la liaison entre l'embout (1) et l'intérieur du réservoir de carburant et est maintenu en position fermée par au moins un cliquet (5), le cliquet (5) ne pouvant être amené dans une position libérant le clapet de verrouillage (3) que par un pistolet de remplissage de réservoir (2) présentant le diamètre (d) plus grand indiqué.

2. Réservoir de carburant suivant la revendication 1,
**caractérisé en ce que**
le ou les cliquet(s) (5) est/sont disposé(s) dans la zone de délimitation de la coupe transversale de l'embout.

3. Réservoir de carburant suivant la revendication 1 ou 2,
**caractérisé en ce qu'**
au moins deux et de préférence plusieurs cliquets (5) (par paire) sont disposés face à face dans chaque zone diamétralement opposée de l'embout (1).

4. Réservoir de carburant suivant l'une des revendications précédentes,
**caractérisé en ce que**
le clapet de verrouillage (3) est amené et/ou maintenu dans sa position fermée par une force de ressort et peut pivoter dans une position débloquant la liaison entre l'embout (1) et l'intérieur du réservoir grâce à l'introduction du pistolet de remplissage de réservoir (2) d'un diamètre (d) plus grand indiqué après le déblocage du ou des cliquets (5).

5. Réservoir de carburant suivant l'une des revendications précédentes,
**caractérisé en ce que**
le ou les cliquet(s) (5) peut (peuvent) être amené(s) de la position bloquant le clapet de verrouillage (3) à une position le débloquant sous l'action d'un pistolet de remplissage de réservoir (2) présentant le diamètre (d) plus grand indiqué allant à l'encontre de la force de ressort ou sous l'effet d'une déformation élastique.

6. Réservoir de carburant suivant l'une des revendications précédentes,
**caractérisé en ce que**
le ou les cliquet(s) (5) peut ou peuvent être déplacés et/ou pivoter. dans une direction principalement à la verticale (direction radiale R) par rapport à l'axe longitudinal (1') de l'embout (1).

7. Réservoir de carburant suivant l'une des revendications précédentes,
**caractérisé en ce que**
le ou les cliquet(s) (5) est/sont pourvu(s) d'un biseau d'introduction (10) sur le côté tourné vers le pistolet de remplissage de réservoir (2, 2') introduit dans l'embout (1).
